# FASCICULE DE BREVET EUROPEEN

(11) **EP 1 245 136 B1**
(45) Date de publication et mention de la délivrance du brevet: **29.10.2003**
(21) Numéro de dépôt: 00993479.5
(22) Date de dépôt: 12.12.2000
(51) Int. Cl.: H05B 41/36, G02F 1/1335

(54) **DISPOSITIF D'ECLAIRAGE D'UN ECRAN A CRISTAUX LIQUIDES**
BELEUCHTUNGSVORRICHTUNG FÜR EINE FLÜSSIGKRISTALLANZEIGE
DEVICE FOR ILLUMINATING A LIQUID CRYSTAL SCREEN

(30) Priorité: 17.12.1999 FR 9915993
(43) Date de publication de la demande: 02.10.2002
(73) Titulaire: THALES AVIONICS S.A., 78140 Vélizy-Villacoublay (FR)
(72) Inventeur: DE LAUZUN, Frédéric Thomson-CSF Propriété Intell., F-94117 Arcueil Cedex (FR); BOUZINAC, Alain Thomson-CSF Propriété Intell., F-94117 Arcueil Cedex (FR); LOPEZ, François Thomson-CSF Propriété Intell., F-94117 Arcueil Cedex (FR)
(74) Mandataire: Collet, Alain
(86) Numéro de dépôt international: FR0003487
(87) Numéro de publication internationale: WO01045474

(56) Documents cités:
- EP-A- 0 364 346
- EP-A- 0 731 437
- WO-A-94/11776
- WO-A-97/20238

## Description

L'invention se rapporte à un dispositif d'éclairage d'un écran à cristaux liquides. Le dispositif d'éclairage comporte habituellement une boite à lumière située derrière l'écran. La boite à lumière comporte une pluralité de sources de lumière. La boite à lumière éclaire l'écran à cristaux liquides par transparence.

Le flux lumineux émis par la boite à lumière doit être fonction de la luminosité ambiante. En effet lorsque la luminosité ambiante est forte, par exemple en plein jour, le flux lumineux émis par la boite à lumière doit être important afin qu'un utilisateur puisse percevoir les informations portées sur l'écran à cristaux liquides. En revanche lorsque la luminosité est faible, l'utilisateur ne doit pas être ébloui par l'écran et on doit en conséquence réduire le flux lumineux émis par la boite à lumière.

On peut utiliser des lampes fluorescentes comme source de lumière et pour faire varier le flux lumineux émis par la boite à lumière, on allume et on éteint simultanément l'ensemble des lames fluorescentes de façon cyclique à une fréquence suffisamment importante pour que l'utilisateur garde l'impression d'un éclairage continu. L'utilisation de lampes fluorescentes permet d'obtenir un niveau d'éclairement important nécessaire lorsque la luminosité ambiante est forte par exemple lorsque le rayonnement solaire éclaire directement l'écran à cristaux liquides. Par contre les lampes fluorescentes ont une durée de vie sensiblement plus faible qu'un équipement comportant l'écran à cristaux liquides et sa boite à lumière. L'usure des lampes fluorescentes peut se traduire soit par une baisse de la luminance des lampes, soit par une variation colorimétrique soit encore par un arrêt de leur fonctionnement. Cette usure nécessite un changement des lampes au cours de la durée de vie de l'équipement. Il est à noter que le fait de réduire le flux lumineux de chaque lampe, par exemple au moyen du fonctionnement cyclique décrit précédemment n'augmente pas sensiblement la durée de vie des lampes.

L'invention a pour but d'augmenter la durée de vie globale des boites à lumière tout en utilisant une pluralité de sources de lumière qui prise séparément ont une durée de vie inférieure à la durée de vie globale recherchée pour la boite à lumière.

Cette durée de vie peut s'apparenter au calcul du temps moyen entre deux pannes, plus connu dans la littérature anglo-saxonne sous le nom de Mean Time Between Failure (MTBF).

Pour atteindre ce but, l'invention a pour objet un dispositif d'éclairage d'un écran à cristaux liquides, le dispositif comportant une boite à lumière située derrière l'écran, la boite à lumière comportant une pluralité de sources de lumière, le dispositif comportant en outre des premiers moyens pour alimenter les sources de lumière, caractérisé en ce que les sources de lumières sont regroupées en au moins deux groupes sensiblement identiques, et en ce que les premiers moyens comprennent des seconds moyens permettant d'éteindre, en régime permanent, un des groupes de sources de lumière lorsque l'autre groupe reste allumé.

Avantageusement, la boite à lumière comporte des troisièmes moyens permettant de diffuser la lumière émise par la pluralité de sources de lumière afin d'éclairer de façon sensiblement uniforme l'écran à cristaux liquide.

Lorsqu'en régime permanent, on éteint au moins une source de lumière, l'uniformité de l'éclairement de l'écran à cristaux liquides est plus difficile à réaliser. Pour améliorer cette homogénéité on peut augmenter la distance entre les sources de lumière et les troisièmes moyens permettant de diffuser la lumière. Une autre solution avantageuse consiste à utiliser des troisièmes moyens qui n'absorbent sensiblement pas le rayonnement lumineux émis par les sources de lumière et qui comportent une surface interne à la boite à lumière réfléchissant une partie importante dudit rayonnement. Ainsi le rayonnement lumineux réfléchit par la surface interne des troisièmes moyens peut se réfléchir à nouveau sur les autres parois internes de la boite à lumière jusqu'à traverser les troisièmes moyens et éclairer l'écran à cristaux liquides.

De ce fait l'uniformité de l'éclairement de l'écran à cristaux liquides est améliorée. Il est ainsi possible de réduire l'épaisseur de la boite à lumière, épaisseur mesurée perpendiculairement à la surface de l'écran à cristaux liquides.

Il est important de noter que le fait que la boite à lumière comporte des troisièmes moyens permettant de diffuser la lumière émise par la pluralité de sources de lumière afin d'éclairer de façon sensiblement uniforme l'écran à cristaux liquide, et que les troisièmes moyens n'absorbent sensiblement pas le rayonnement lumineux émis par les sources de lumière et comportent une surface interne à la boite à lumière réfléchissant une partie importante dudit rayonnement peut être utilisé indépendamment du fait que les premiers moyens comprennent des seconds moyens permettant, en régime permanent, d'éteindre au moins une des sources de lumière lorsque les autres sources restent allumées et ceci afin d'améliorer l'uniformité de l'éclairement de l'écran à cristaux liquides ou encore afin de réduire l'épaisseur de la boite à lumière.

L'invention sera mieux comprise et d'autres avantages apparaîtront à la lecture de la description d'un mode de réalisation détaillé de l'invention, description illustrée par le dessin joint dans lequel :

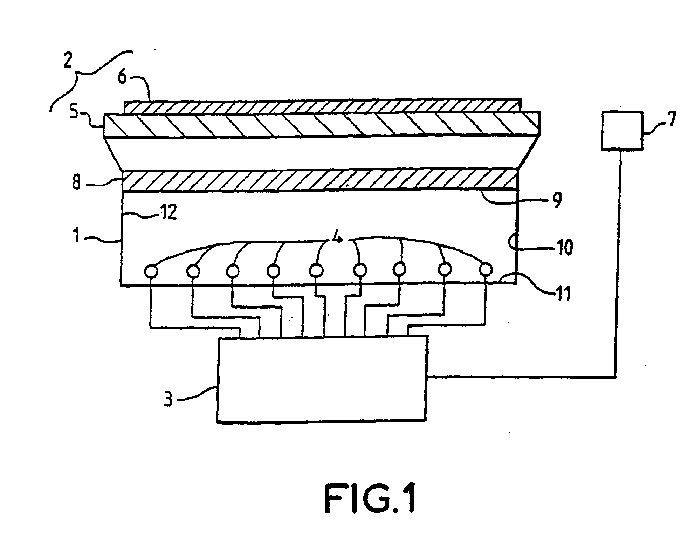

- la figure 1 représente schématiquement un équipement comportant un écran à cristaux liquides et son dispositif d'éclairage.

L'équipement comporte une boite à lumière 1, un écran à cristaux liquides 2 ainsi que des moyens 3 pour alimenter des sources de lumières 4 appartenant à la boite à lumière 1. La boite à lumière 1 et les moyens 3 forment un dispositif d'éclairage de l'écran à cristaux liquides 2. L'écran à cristaux liquides comporte deux plaques 5 et 6 entre lesquelles se situent les cristaux liquides. Le fonctionnement de l'écran à cristaux liquides ne sera décrit ici plus en détail. Les moyens 3 permettent, par exemple grâce un circuit électronique, d'éteindre au moins une des sources de lumière 4 lorsque les autres sources de lumière 4 restent allumées et ceci en régime permanent

On peut par exemple réaliser une boite à lumière comportant un nombre important de sources de lumière 4 sensiblement identiques et alignées. On affecte à chaque source un numéro de rang représentant sa position dans une ligne. On regroupe les sources de rang impair dans la ligne à l'intérieur d'un premier groupe de sources de lumière 4 et les sources de rang pair dans la ligne dans un second groupe de sources de lumière 4. Les deux groupes sont ainsi sensiblement identiques.

Avantageusement, le niveau d'éclairement de l'écran à cristaux liquides 2 est fonction de la luminosité ambiante par exemple mesurée au moyen d'une cellule photoélectrique 7. La cellule 7 mesure la luminosité ambiante au voisinage de l'écran à cristaux liquides 2 et transmet sa mesure sous forme d'un signal électrique aux moyens 3.

Dans la pratique, la luminosité ambiante ne nécessite que rarement l'allumage simultané des deux groupes de sources de lumière 4. Par exemple, dans le domaine aéronautique, des spécifications imposent que l'écran à cristaux liquides soit visible même lorsqu'il reçoit directement un rayonnement solaire. Dans ce cas, l'allumage des deux groupes de sources de lumière 4 est nécessaire. En réalité, ce cas est très rarement atteint et la plupart du temps, un seul groupe de sources de lumière 4 est suffisant pour éclairer l'écran à cristaux liquides.

En conséquence, on peut prévoir que durant une période longue, donc en régime permanent, on privilégie l'allumage d'un groupe quelconque sur les deux, l'autre n'étant allumé que dans le cas où la luminosité ambiante le requiert. On peut par exemple prévoir de changer de groupe privilégié une fois par vingt quatre heures ou encore, à chaque fois que l'ensemble de l'équipement est mis hors service. Le changement de groupe privilégié se fait indépendamment de la luminosité ambiante. Lorsqu'un des groupes de sources de lumière 4 n'est pas allumé sa durée de vie n'est pas entamé. Dans cet exemple on augmente très sensiblement la durée de vie de l'ensemble des sources de lumière 4.

Le fait que les deux groupes de sources de lumière 4 soient sensiblement identiques permet d'alterner le groupe privilégié sans aucune conséquence sur la luminosité émise par la boîte à lumière.

Il est bien entendu possible de faire varier le flux lumineux émis par le groupe privilégié, ou par les deux si besoin est, en fonction de la luminosité ambiante par exemple en faisant varier le rapport cyclique d'allumage et d'extinction de l'ensemble des lampes d'un groupe. On rappelle que le temps de cycle doit être suffisamment faible pour qu'un utilisateur de l'écran à cristaux liquides ne puisse pas apercevoir l'allumage et l'extinction cyclique des sources de lumière 4. La durée d'un cycle peut par exemple être de 0,02 secondes.

Avantageusement, la boite à lumière comporte un filtre 8 permettant de diffuser la lumière émise par la pluralité des sources de lumière 4 afin d'éclairer de façon homogène l'écran à cristaux liquides 2.

Avantageusement encore, le filtre 8 n'absorbe sensiblement pas le rayonnement lumineux émis par les sources de lumière 4 et comporte une surface 9 interne à la boite à lumière réfléchissant une partie importante du rayonnement émis par les sources de lumière 4. Les deux caractéristiques décrites ci-dessus existent par exemple dans un filtre polariseur réflectif. Plus précisément, il s'agit d'un filtre qui ne laisse passer que le rayonnement lumineux sensiblement polarisé dans une direction et qui réfléchit le rayonnement lumineux qui n'est pas sensiblement polarisé dans ladite direction.

Le filtre polariseur réflectif est avantageusement associé à une boite à lumière 1 dont les parois internes 10, 11 et 12 sont réalisées dans un matériau n'absorbant sensiblement pas et réfléchissant sensiblement la totalité du rayonnement lumineux émis par les sources de lumière 4.

Un matériau contenant du polytétrafluoroéthylène n'absorbe que très peu et a un bon pouvoir réfléchissant du rayonnement lumineux émis par les sources de lumière. Par ailleurs, on constate que la polarisation d'un rayon lumineux se modifie lors d'une réflexion sur un matériau contenant du polytétrafluoroéthylène. Ainsi un rayon lumineux émis par une source de lumière 4 ne traversera le filtre que lorsque sa polarisation sera convenable et si nécessaire après plusieurs réflexions contre l'une des parois 10, 11, 12 ou/et contre la surface 9 interne. Ces multiples réflexions permettent d'uniformiser le flux lumineux sortant de la boite à lumière 1 et éclairant l'écran à cristaux liquides 2.

Avantageusement, les sources de lumière 4 comportent des tubes fluorescents à cathode froide. Ces tubes ont une durée de vie plus importante et un coût moins élevé que les tubes à cathode chaude.

## Revendications

1. Dispositif d'éclairage d'un écran à cristaux liquides (2), le dispositif comportant une boite à lumière (1) située derrière l'écran (2), la boite à lumière (1) comportant une pluralité de sources de lumière (4), le dispositif comportant en outre des premiers moyens (3) pour alimenter les sources de lumière (4), **caractérisé en ce que** les sources de lumières (4) sont regroupées en au moins deux groupes sensiblement identiques, et **en ce que** les premiers moyens (3) comprennent des seconds moyens permettant d'éteindre, en régime permanent, un des groupes de sources de lumière (4) lorsque l'autre groupe reste allumé.

2. Dispositif selon la revendication 1, **caractérisé en ce que** la boite à lumière (1) comporte des troisièmes moyens (8) permettant de diffuser la lumière émise par la pluralité de sources de lumière (4) afin d'éclairer de façon sensiblement uniforme l'écran à cristaux liquide (2).

3. Dispositif selon la revendication 2, **caractérisé en ce que** les troisièmes moyens (8) n'absorbent sensiblement pas le rayonnement lumineux émis par les sources de lumière (4) et comportent une surface (9) interne à la boite à lumière (1) réfléchissant une partie importante dudit rayonnement.

4. Dispositif selon la revendication 3, **caractérisé en ce que** les troisièmes moyens (8) comprend un filtre polariseur réflectif.

5. Dispositif selon l'une des revendications précédentes, **caractérisé en ce que** les parois internes (10, 11, 12) de la boite à lumière (1) sont réalisées dans un matériau n'absorbant sensiblement pas et réfléchissant sensiblement la totalité du rayonnement lumineux émis par les sources de lumière (4).

6. Dispositif selon la revendication 5, **caractérisé en ce que** les parois internes (10, 11, 12) de la boite à lumière (1) comportent du polytétrafluoroéthylène.

7. Dispositif selon l'une des revendications précédentes, **caractérisé en ce que** les sources de lumière (4) comportent des tubes fluorescents à cathode froide.

8. Dispositif selon l'une des revendications précédentes, **caractérisé en ce qu'**en régime permanent, on privilégie l'allumage d'un groupe quelconque de sources de lumière (4).

9. Dispositif selon la revendication 8, **caractérisé en ce que**, périodiquement, on change de groupe privilégié indépendamment de la luminosité ambiante.

## Patentansprüche

1. Vorrichtung zum Beleuchten eines Flüssigkristallbildschirms (2), wobei die Vorrichtung ein Beleuchtungsgehäuse (1) enthält, das sich hinter dem Bildschirm (2) befindet, wobei das Beleuchtungsgehäuse (1) eine Mehrzahl von Lichtquellen (4) enthält, wobei die Vorrichtung ferner erste Mittel (3) zum Speisen der Lichtquellen (4) enthält, **dadurch gekennzeichnet, dass** die Lichtquellen (4) in zumindest zwei im wesentlichen identische Gruppen zusammengefasst sind und dass die ersten Mittel (3) zweite Mittel enthalten, die es ermöglichen, im stabilen Zustand die eine Gruppe von Lichtquellen (4) auszuschalten, während die andere Gruppe eingeschaltet bleibt.

2. Vorrichtung nach Anspruch 1, **dadurch gekennzeichnet, dass** das Beleuchtungsgehäuse (1) dritte Mittel (8) enthält, die es ermöglichen, das von den mehreren Lichtquellen (4) abgestrahlte Licht zu zerstreuen, um den Flüssigkristallbildschirm (2) im wesentlichen einheitlich zu beleuchten.

3. Vorrichtung nach Anspruch 2, **dadurch gekennzeichnet, dass** die dritten Mittel (8) die von den Lichtquellen (4) ausgesendete Lichtstrahlung im wesentlichen nicht absorbieren und eine Fläche (9) innerhalb des Beleuchtungsgehäuses (1) enthalten, die einen Großteil der genannten Strahlung reflektiert.

4. Vorrichtung nach Anspruch 3, **dadurch gekennzeichnet, dass** die dritten Mittel (8) ein reflektierendes Polarisationsfilter enthalten.

5. Vorrichtung nach einem der vorangehenden Ansprüche, **dadurch gekennzeichnet, dass** die Innenwände (10, 11, 12) des Beleuchtungsgehäuses (1) aus einem Material hergestellt sind, das die von den Lichtquellen (4) ausgesendete Lichtstrahlung im wesentlichen nicht absorbiert und das sie im wesentlichen vollständig reflektiert.

6. Vorrichtung nach Anspruch 5, **dadurch gekennzeichnet, dass** die Innenwände (10, 11, 12) des Beleuchtungsgehäuses (1) Polytetrafluorethylen enthalten.

7. Vorrichtung nach einem der vorangehenden Ansprüche, **dadurch gekennzeichnet, dass** die Lichtquellen (4) Kaltkathodenleuchtstoffröhren enthalten.

8. Vorrichtung nach einem der vorangehenden Ansprüche, **dadurch gekennzeichnet, dass** im stabilen Zustand eine beliebige Gruppe von Lichtquellen (4) bevorzugt eingeschaltet wird.

9. Vorrichtung nach Anspruch 8, **dadurch gekennzeichnet, dass** die bevorzugt eingeschaltete Gruppe unabhängig von der Umgebungshelligkeit periodisch gewechselt wird.

## Claims

1. Device for illuminating a liquid crystal screen (2), the device comprising a light box (1) located behind the screen (2), the light box (1) comprising a plurality of light sources (4), the device further comprising first means (3) to power the light sources (4), **characterized in that** the light sources (4) are grouped together in at least two substantially identical groups, and **in that** the first means (3) comprise second means enabling, under steady conditions, one of the groups of light sources (4) to be extinguished while the other group remains lit.

2. Device according to Claim 1, **characterized in that** the light box (1) comprises third means (8) enabling the light emitted by the plurality of light sources (4) to be diffused in order to illuminate the liquid crystal screen (2) in a substantially uniform manner.

3. Device according to Claim 2, **characterized in that** the third means (8) do not substantially absorb the light radiation emitted by the light sources (4) and comprise a surface (9) internal to the light box (1) reflecting a considerable portion of said radiation.

4. Device according to Claim 3, **characterized in that** the third means (8) comprise a reflecting polarizing filter.

5. Device according to one of the preceding claims, **characterized in that** the internal walls (10, 11, 12) of the light box (1) are made of a substantially nonabsorbent material which reflects substantially all the light radiation emitted by the light sources (4).

6. Device according to Claim 5, **characterized in that** the internal walls (10, 11, 12) of the light box (1) consist of polytetrafluoroethylene.

7. Device according to one of the preceding claims, **characterized in that** the light sources (4) comprise cold-cathode fluorescent tubes.

8. Device according to one of the preceding claims, **characterized in that**, under steady conditions, the lighting of any group of light sources (4) is favoured.

9. Device according to Claim 8, **characterized in that**, periodically, the favoured group is changed independently of the ambient brightness.
